# EUROPÄISCHE PATENTSCHRIFT

(11) **EP 2 008 179 B1**
(45) Veröffentlichungstag und Bekanntmachung des Hinweises auf die Patenterteilung: **01.08.2012**
(21) Anmeldenummer: 07726929.8
(22) Anmeldetag: 15.03.2007
(51) Int. Cl.: G06F 9/445, G11C 16/10

(54) **ERWEITERUNG DER FUNKTIONALITÄT EINER SERIEN-SOFTWARE IN EINEM STEUERGERÄT**
ENHANCEMENT OF THE FUNCTIONALITY OF PRODUCTION-MODEL SOFTWARE IN A CONTROLLER
EXTENSION DE LA FONCTIONNALITÉ D'UN LOGICIEL SÉQUENTIEL DANS UN DISPOSITIF DE COMMANDE

(30) Priorität: 11.04.2006 DE 102006016891
(43) Veröffentlichungstag der Anmeldung: 31.12.2008
(73) Patentinhaber: Robert Bosch GmbH, 70442 Stuttgart (DE)
(72) Erfinder: SCHNEIDER, Klaus, 71640 Ludwigsburg (DE); HENSEL, Daniel, 70825 Korntal-Muenchingen (DE)
(86) Internationale Anmeldenummer: PCT/EP2007/052439
(87) Internationale Veröffentlichungsnummer: WO 2007/118743

(56) Entgegenhaltungen:
- DE-A1- 10 260 103
- GB-A- 2 330 428
- GB-A- 2 373 888
- DIEDRICH, O., DR.: "Virenklatsche Knoppicillin-3: Mehr als ein Virenscanner", C'T HEISE ZEITSCHRIFTEN VERLAG GMBH & CO. KG, no. 20, 30 September 2004 (2004-09-30), pages 144-149, XP007920457, Hannover (DE) ISSN: 0724-8679

## Beschreibung

### STAND DER TECHNIK

Die vorliegende Erfindung betrifft ein Verfahren zur Erweiterung der Funktionalität einer Serien-Software eines Steuergeräts ein für Kraftfahrzeug, sowie ein dem entsprechendes Steuergerät.

Steuergeräte für ein Kraftfahrzeug steuern die Funktionen des Kraftfahrzeugs, wie zum Beispiel Kraftstoffeinspritzung, Zündzeitpunkt, Wegfahrsperre, usw. Das Steuergerät verfügt dabei über einen Mikrocontroller, welcher eine vorbestimmte Steuergerät-Software ausführt, sowie einen Speicher, in dem diese Steuergerät-Software abgespeichert ist. Das Steuergerät steuert Funktionseinheiten (z. B. das Dosiersystem für die Kraftstoffeinspritzung des Motors o. ä.), die beispielsweise über einen Datenbus mit dem Steuergerät verbunden sind.

Die Steuergerät-Software verfügt in der Regel über eine Diagnosefunktionalität, mit Hilfe derer im Fahrzeugbetrieb auftretende Fehler diagnostiziert werden können. Zur Entwicklung der Diagnosefunktionalität werden während der Entwicklungsphase mögliche Fehler, die in der Serien-Ausfertigung auftreten können, zusammengetragen. Beispiele für solche Fehler sind Fehler, die erfahrungsgemäß häufig auftreten sowie Fehler, die aus einer Systemanalyse während der Entwicklung abgeleitet werden. Insbesondere können Fehler auch durch das Zusammenspiel der zahlreichen verschiedenen Fahrzeugkomponenten auftreten. Für alle diese Fehler wird in der Steuergerät- Software eine entsprechende Diagnosefunktion erstellt.

Nach Fertigstellen der Steuergerät-Software wird diese in einen nicht-flüchtigen Speicher (z. B. einen Flash-Speicher) im Steuergerät des Kraftfahrzeugs eingespielt. Eine solche fertig gestellte Steuergerät-Software wird im Folgenden auch als "Serien-Software" bezeichnet.

Es hat sich jedoch in der Praxis erwiesen, dass es nahezu unmöglich ist, schon während der Entwicklung alle möglichen Fehler zu berücksichtigen bzw. zu antizipieren und eine entsprechende Diagnosefunktion zu erstellen. Falls nun im Fahrbetrieb ein Fehler auftritt, für den während der Entwicklung keine Diagnosefunktion erstellt wurde, dann ist es auch nicht möglich, die Ursache dieses Fehlers mit Hilfe der Diagnosefunktionalität der Serien-Software zu analysieren. Dies kann zu einer langwierigen und kostspieligen Fehlersuche in einer Service-Werkstatt oder dergl. und häufig auch zum Austausch von nicht defekten Komponenten führen.

Eine gängige Möglichkeit, die Diagnosefunktionalität von bestehender Serien-Software zu erweitern, besteht darin, auf das Steuergerät eine neue, erweiterte Steuer-Software aufzuspielen. Dies hat jedoch den Nachteil, dass eine solche Neuprogrammierung sehr aufwändig ist und ferner eine Neuprogrammierung im Service häufig nicht vom Steuergerät selbst unterstützt wird.

Die DE 102 60 103A1 schlägt vor, im Steuergerät zusätzlich zu einem regulären ersten nicht-flüchtigen Speicherbereich einen zweiten nicht-flüchtigen Speicherbereich vorzusehen in den neue Softwareteile (so genannte Patches) eingeschrieben werden. Mittels einer Verzweigung vom ersten Speicherbereich werden statt der alten Softwareteile im ersten Speicherbereich die neuen Softwareteile im zweiten Speicherbereich ausgeführt. Nach Ausführung der neuen Softwareteile zweigt die Prozedur von dem zweiten Speicherbereich wieder zurück in den ersten Speicherbereich.

Auch hierbei ergibt sich das Problem, dass das Einspielen der Patches vergleichsweise aufwändig ist oder sogar nicht unterstützt sein kann. Ferner führt eine Berücksichtigung aller, eventuell erst nach Auslieferung entwickelten, Diagnosefunktionen zu einem Aufblähen des Programm-Codes, für den dann entsprechend umfangreiche Ressourcen bereitgestellt werden müssen.

In der GB 2 373 888 A ist beschrieben, von einer als Mikroprozessor-Control-Unit ausgebildeten Einrichtung einen neuen sogenannten "Patch Code", bei dem es sich um ein Software-Update handeln kann, auf einen Festspeicher "Programm ROM" eines Geräts u überspielen und dabei bereits vorhandene Softwaremodule durch Implementieren zu ersetzen.

Eine Einrichtung für ein eingebettetes Mikroprozessorsystem zum Reparieren von Programmen ist aus der GB 2 330 428 bekannt. Dabei ist vorgesehen, dass Segmente aus einem ROM-Speicher die fehlerhaft sind, durch Segmente, die von einer externen CPU auf einen RAM-Speicher geladen werden, ersetzt werden.

### VORTEILE DER ERFINDUNG

Demgemäß vorgesehen ist ein Verfahren zur Erweiterung der Funktionalität einer Serien-Software eines Steuergerätes für ein Kraftfahrzeug, mit den Schritten gemäß Anspruch 1, beziehungsweise ein Steuergerät nach Anspruch 7.

Die externe Hardwarevorrichtung kann insbesondere als Diagnosegerät ausgebildet sein. Die Mittel zum Laden der Upload-Software können insbesondere durch einen unten beschriebenen Upload-Handler realisiert werden, welcher das Laden der Upload-Software in den für sie vorgesehenen Speicherbereich koordiniert.

Der der Erfindung zugrunde liegende Gedanke ist es, eine bedarfsorientierte Erweiterung der Serien-Software und insbesondere der Diagnose- und/oder Testfunktionalität dadurch zu erreichen, dass eine Erweiterungssoftware (Upload-Software) in den RAM-Speicher des Steuergerätes geladen wird. Daraus ergibt sich der wesentliche Vorteil, dass die Erweiterung des Steuergeräts um die Diagnose- bzw. Testfunktionalität in einfacher Weise, also insbesondere ohne aufwändigen Austausch der Serien-Software erreicht werden kann.

Ein weiterer Vorteil ist der, dass Funktionen, die nur selten gebraucht werden, nur bei Bedarf geladen werden zu brauchen. Beispielsweise ist es möglich, Diagnosefunktionen, die nicht während des Fahrbetriebes sondern nur in der Diagnose oder Wartung aufgerufen werden, nicht in der Serien-Software vorzusehen, sondern lediglich in der bedarfsweise zu ladenden Upload-Software. Somit ergibt sich eine erhebliche Einsparung von Ressourcen im Vergleich zu dem Fall, dass sämtliche Diagnose- und Testfunktionen in der Serien-Software vorgesehen sind.

Ein weiterer Vorteil des erfindungsgemäßen Verfahrens ist der, dass es ohne eine Modifikation des Steuergerätes ausgeführt werden kann.

Es ist vorteilhaft, wenn die Upload-Software während des Ausführens der Upload-Software lediglich auf vorbestimmte Parameter der Serien-Software zugreift. Es ist besonders vorteilhaft, dass das Laufzeitverhalten der Serien-Software durch das Ausführen der Upload-Software nicht beeinflusst wird. Dies ist beispielsweise nicht möglich, wenn die erweiterte Funktionalität offboard realisiert wird, also die Erweiterungssoftware beispielsweise auf einem Diagnosegerät läuft und Daten über einen entsprechenden Datenlink zwischen dem Steuergerät und dem Diagnosegerät ausgetauscht werden. In diesem Falle verfälschen die für die Datenübertragung notwendigen Zeiten das Laufzeitverhalten. Im Gegensatz dazu wird mit dem erfindungsgemäßen Verfahren ein exzellentes Echtzeitverhalten erreicht.

In einer Weiterbildung des Verfahrens wird die Upload-Software nur ausgeführt, solange die externe Hardwarevorrichtung an das Steuergerät angeschlossen ist. Somit wird sichergestellt, dass die Upload-Software nicht fehlerhaft aktiviert werden kann.

In einer vorteilhaften Weiterbildung des Verfahrens ist ein weiterer Schritt vorgesehen, in welchem die Upload-Software von einer Authentifizierungseinrichtung authentifiziert wird. Somit wird sichergestellt, dass die Funktionalität zum Laden der Upload-Software nicht missbräuchlich (z. B. zum Tunen des Fahrzeugs) verwendet wird.

Es ist vorgeshen, dass die Upload-Software beim Laden von der externen Hardware-vorrichtung in den flüchtigen Upload-Speicherbereich des Steuergerätes eine Dummy-Upload-Software ersetzt, deren Laufzeitverhalten gleich dem Laufzeitverhalten der Upload-Software ist. Somit wird sichergestellt, dass das Laufzeitverhalten der Steuergerätsoftware unabhängig davon ist, ob die Upload-Software installiert ist oder nicht.

In einer vorteilhaften Weiterbildung des Verfahrens ist ein weiterer Schritt vorgesehen, in welchem nach dem Ausführen der Upload-Software die Upload-Software gelöscht wird und die Upload-Software durch die Dummy-Upload-Software ersetzt wird, deren Laufzeitverhalten gleich dem Laufzeitverhalten der Upload-Software ist. Dies ist eine weitere Maßnahme, um sicherzustellen, dass die Upload-Software nicht fehlerhaft aktiviert werden kann und dass das Laufzeitverhalten der Steuergerätsoftware unabhängig davon ist, ob die Upload-Software installiert ist oder nicht.

In einer vorteilhaften Weiterbildung des Steuergerätes ist weiterhin eine Authentifizierungseinrichtung vorgesehen, die die Upload-Software beim Laden von der externen Hardwarevorrichtung in den Upload-Speicherbereich authentifiziert. Somit wird sichergestellt, dass die Funktionalität zum Laden der Upload-Software nicht missbräuchlich (z. B. zum Tunen des Fahrzeugs) verwendet wird.

In Steuergerät ist im Upload-Speicherbereich eine Dummy-Upload-Software gespeichert, deren Laufzeitverhalten dem Laufzeitverhalten der Upload-Software entspricht, und die beim Laden der Upload-Software von der externen Hardwarevorrichtung in den flüchtigen Upload-Speicherbereich des Steuergerätes ersetzt wird. Dies stellt sicher, dass das Laufzeitverhalten der Steuergerätsoftware unabhängig davon ist, ob die Upload-Software installiert ist oder nicht.

### ZEICHNUNGEN

Die Erfindung wird nachfolgend anhand der in den schematischen Figuren der Zeichnungen angegebenen Ausführungsbeispiele näher erläutert. Es zeigt dabei:
- Fig. 1: ein Blockdiagramm eines Steuergerätes nach einer erfindungsgemäßen Ausführungsform der vorliegenden Erfindung, an welchen ein Diagnosegerät angeschlossen ist,
- Fig. 2: ein schematisches Diagramm, welches den Daten- und Informationsfluss ein einem erfindungsgemäßen Verfahren illustriert, und
- Fig. 3: ein Flussdiagramm einer Ausführungsform eines erfindungsgemäßen Verfahrens.

### BESCHREIBUNG DER AUSFÜHRUNGSBEISPIELE

In allen Figuren der Zeichnungen sind gleiche bzw. funktionsgleiche Elemente - sofern nichts Anderes angegeben ist - mit gleichen Bezugszeichen versehen worden.

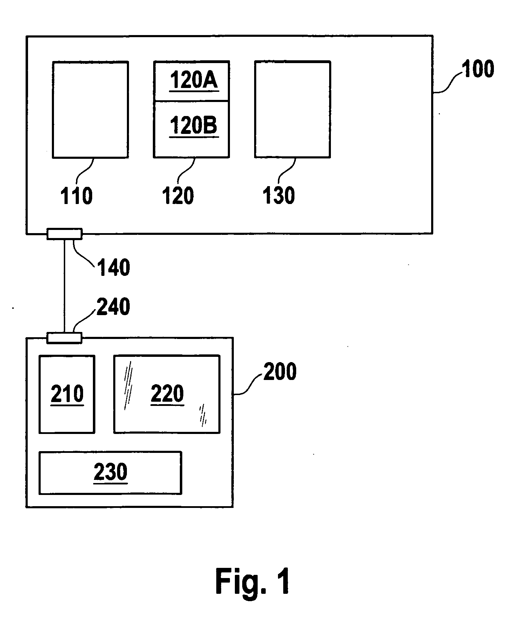

Fig. 1 ist ein Blockdiagramm eines erfindungsgemäßen Steuergerätes 100, an welchen ein Diagnosegerät 200 angeschlossen ist. Im vorliegenden Beispiel ist das Steuergerät 100 in einem (nicht näher dargestellten) Kraftfahrzeug vorgesehen.

Das Steuergerät 100 umfasst einen nicht-flüchtigen Speicher 110, einen flüchtigen Speicher 120, einen Mikroprozessor 130 sowie eine Schnittstelle 140. Der nicht-flüchtigen Speicher 110 kann insbesondere als Flash-Speicher ausgebildet sein. In diesem Flash-Speicher 110 ist eine Serien-Software abgespeichert, die werksseitig entwickelt wurde und die Funktionseinheiten des Kraftfahrzeugs steuert. Dabei wird die Serien-Software in bekannter Weise in den Mikroprozessor 130 geladen und ausgeführt.

Der flüchtige Speicher 120 ist ein RAM-Speicher, der einen ersten Speicherbereich 120A und einen zweiten Speicherbereich 120B aufweist. Der erste Speicherbereich 120A wird beispielsweise von der Serien-Software zum Ablegen von Funktionswerten oder Parametern verwendet. Im zweiten Speicherbereich 120B (im Folgenden auch als "Upload-Speicherbereich" bezeichnet) kann eine Upload-Software gespeichert, welche die Funktionalität der Seriensoftware erweitert.

Der Flash-Speicher 110 und der RAM-Speicher 120 sind mit der Schnittstelle 140, die beispielsweise als CAN-Schnittstelle ausgeführt sein kann, verbunden. Diese Schnittstelle 140 kann an ein Entwicklungs-Tool angeschlossen werden, von welchem die Serien-Software in den Flash-Speicher 110 eingespielt werden kann. Nach Einbau des Steuergerätes 100 in das Fahrzeug ist die Schnittstelle 140 mit einer (nicht näher dargestellten) Diagnosebuchse verbunden, an welche beispielsweise ein Diagnosegerät 200 angeschlossen werden kann. Somit ergibt sich die in Fig. 1 schematisch dargestellte Anordnung.

Wie in Fig. 1 dargestellt umfasst das Diagnosegerät 200 einen Speicher 210, ein Display 220, eine Eingabeeinrichtung 230 (z. B. eine Tastatur) und eine Schnittstelle 240, und kann beispielsweise mit einem PC, einem Laptop oder dergleichen realisiert werden. Im Speicher 210 ist eine Upload-Software abgespeichert, welche in einer speziellen Entwicklungsumgebung entwickelt wurde. Diese Upload-Software kann beispielsweise Diagnosefunktionen oder Testfunktionen umfassen, welche nicht in der bereits im Steuergerät 100 installierten Serien-Software enthalten sind. Insbesondere können solche Diagnose- oder Testfunktionen auch nach Auslieferung der Serien-Software entwickelt worden sein. Mittels einer Anweisung, die in die Eingabeeinrichtung 230 eingegeben wird, kann die Upload-Software über die Schnittstellen 240 und 140 in den Upload-Speicherbereich 120B geladen werden. Somit wird die im Flash-Speicher 110 vorhandene Serien-Software ergänzt. Die von der Upload-Software (oder auch der Serien-Software) im Rahmen einer Fehlerdiagnose ermittelten Messwerte, Analyseergebnisse oder dergleichen können dann auf dem Display 220 dargestellt werden. In einer alternativen Ausführungsform ist es jedoch auch möglich, nach Aufspielen der Upload-Software das Diagnosegerät 200 vom Steuergerät 100 zu trennen und die während einer Fehlerdiagnose ermittelten Messwerte oder dergleichen in einem geeigneten Speicher (z. B. einem Drive-Recorder) abzuspeichern und zu einem späteren Zeitpunkt auszulesen und zu analysieren.

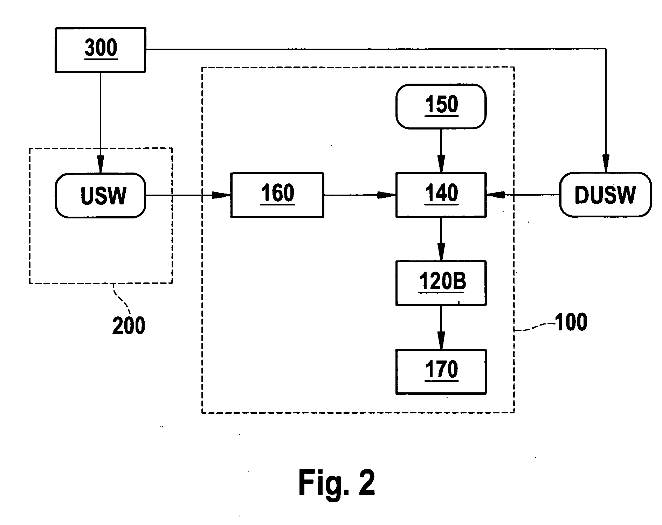

Fig. 2 ist ein schematisches Diagramm, welches den Daten- und Informationsfluss in einem beispielhaften Verfahren zur Erweiterung der Funktionalität der Serien-Software des oben erläuterten Steuergeräts 100 illustriert. Die Upload-Software USW wird auf einer speziellen Entwicklungsumgebung 300 erstellt. Diese Entwicklungsumgebung stellt sicher, dass die Upload-Software USW nicht mit dem normalen Ablauf der Serien-Software interferiert und somit eine Verfälschung des Ablaufverhaltens der Serien-Software bewirkt. Insbesondere stellt die Entwicklungsumgebung 300 sicher, dass die Upload-Software USW keine unerlaubten Zugriffe auf die Serien-Software tätigt. Dies kann beispielsweise dadurch erreicht werden, dass die Upload-Software USW lediglich auf Lesezugriffe auf vorbestimmte Parameter (z. B. Variablen und Funktionen) der Serien-Software sowie Schreibzugriffe auf vorbestimmte Bereiche eines RAM-Speicherbereichs vornehmen darf.

Nach dem Transfer von der Entwicklungsumgebung 300 zum Diagnosetester 200 und Anschließen des Diagnosetesters 200 an das Steuergerät 100 kann die Upload-Software USW über die Laufzeitumgebung 140 des Steuergerätes 100 in den Upload-Speicher 120B geladen werden. Das Laden der Upload-Software USW wird dabei von einem so genannten Upload-Handler koordiniert, welcher sicherstellt, dass die Upload-Software USW in den für sie vorgesehenen Speicherbereich geladen wird. Der Upload-Handler kann insbesondere als Teil des Betriebssystems 150 des Steuergeräts 100 ausgelegt werden und ist ein Mechanismus, der zur Verfügung gestellt wird, damit eine temporäre Erweiterung der Serien-Software durch die Upload-Software erreicht werden kann.

Während des Ladens der Upload-Software USW in den Upload-Speicher 120B wird von einer Authentifizierungseinrichtung 160 eine Authentifizierung der Upload-Software USW vorgenommen. Die Funktion dieser Authentifizierungseinrichtung 160 kann auch von Upload-Handler übernommen werden. Durch Manipulation der vom Steuergerät 100 ausgeführten Software ist es beispielsweise möglich, die Performanz des Kraftfahrzeugs zu steigern (so genanntes Tuning). Dies führt allerdings zu erhöhten Sicherheitsrisiken im Straßenverkehr und ist daher vom Hersteller, auch im Hinblick auf klare Haftungsverhältnisse, unerwünscht. Die Authentifizierung der Upload-Software mit der Authentifizierungseinrichtung 160 soll somit sicherstellen, dass die Upload-Funktionalität nicht von Dritten zu einem unbefugten Ändern (also Tunen) der vom Steuergerät 100 ausgeführten Software führt. Ein einfacher Schutz gegen solche Manipulationen kann mit der Verwendung von Passwörtern erreicht werden. Dazu wird im Flash-Speicher 110 ein Passwort abgelegt und das Schreiben der Upload-Software in den Upload-Speicher 120B wird von der Authentifizierungseinrichtung 160 nur bei Vorlage des richtigen Passwortes durch das Diagnosegerät 200 bzw. durch die Upload-Software erlaubt. Ein verbesserter Schutz lässt sich durch den Einsatz Zertifikaten und einem asymmetrischen Kryptosystem erreichen. Dabei ist die zu übertragende Software mit dem privaten Schlüssel der zertifizierenden Stelle, also hier durch den Hersteller der Upload-Software signiert, und kann seitens des Steuergerätes mit dem korrespondierenden öffentlichen Schlüssel überprüft werden.

Nach dem Laden der Upload-Software USW wird diese auf dem Steuergerät 100 ausgeführt. Dabei kann die Upload-Software USW nur auf vorbestimmte Parameter bzw. Schnittstellen 170 zugreifen. Beispielsweise kann die Upload-Software USW nur lesend auf die Serien-Software zugreifen und kann Schreibzugriffe auch nur in einem bestimmten Bereich des RAM-Speichers 120 vornehmen. Neben solchen Zugriffsrechten werden auch Randbedingungen bezüglich der Systemressourcen (z. B. Übertragungsbandbreite) berücksichtigt. Somit wird sichergestellt, dass die Serien-Software nicht unerlaubt von der Upload-Software beeinflusst wird.

Die Ausführung der Upload-Software wird vom Upload-Handler gesteuert. Dazu ist der Upload-Handler, wie jede andere Steuergerätfunktion, im Betriebssystem eingetragen und wird somit vom Betriebssystem aufgerufen. Der Aufruf des Upload-Handlers durch das Betriebssystem kann interrupt-gesteuert erfolgen, um eine schnelle Reaktion zu erreichen, erfolgt aber üblicherweise mit Hilfe eines entsprechenden Scheduling des Betriebssystems. Beim Laden der Upload-Software wird vom Upload-Handler ein interner Status gesetzt, der anzeigt, dass und wo eine Upload-Software verfügbar ist. Wenn der Upload-Handler dann vom Betriebssystem aufgerufen wird, sieht er diesen Status ein und führt gegebenenfalls die Upload-Software aus. Dies kann dadurch geschehen, dass der Upload-Handler eine Verzweigung des Programmablaufs zur Upload-Software oder einem entsprechenden Teil der Upload-Software verursacht.

Vor dem Laden der Upload-Software USW in den Speicherbereich 120B ist dort eine so genannte Dummy-Upload-Software DUSW (beispielsweise aus Noop-Code) vorgesehen. Diese weist dieselben Laufzeiteigenschaften wie die später zu ladende Upload-Software USW auf. Während des regulären Fahrbetriebs wird die Dummy-Upload-Software DUSW vom Betriebssystem bzw. vom Upload-Handler aufgerufen und ausgeführt. Durch die Dummy-Upload-Software wird also sichergestellt, dass das Laufzeitverhalten der Serien-Software gleich ist, unabhängig davon, ob eine Upload-Software geladen ist oder nicht. Die Dummy-Upload-Software bestimmt somit auch die Spezifikation für eine später zu entwickelnde Upload-Software. Mit anderen Worten wird durch die Dummy-Upload-Software eine bestimmte Laufzeit in der Ausführung der Serien-Software freigehalten. Die Upload-Software wird dann unter der Maßgabe entwickelt, dass diese Laufzeit nicht überschritten wird. Es ist auch möglich, durch die Dummy-Upload-Software mehrere Zeitblöcke unterschiedlicher Länge freizuhalten, die jeweils einem bestimmten Speicherbereich im Upload-Speicher 120B entsprechen. Die Upload-Software wird in diesem Falle vom Upload-Handler in einem ihrer Laufzeit entsprechenden Speicherbereich abgespeichert.

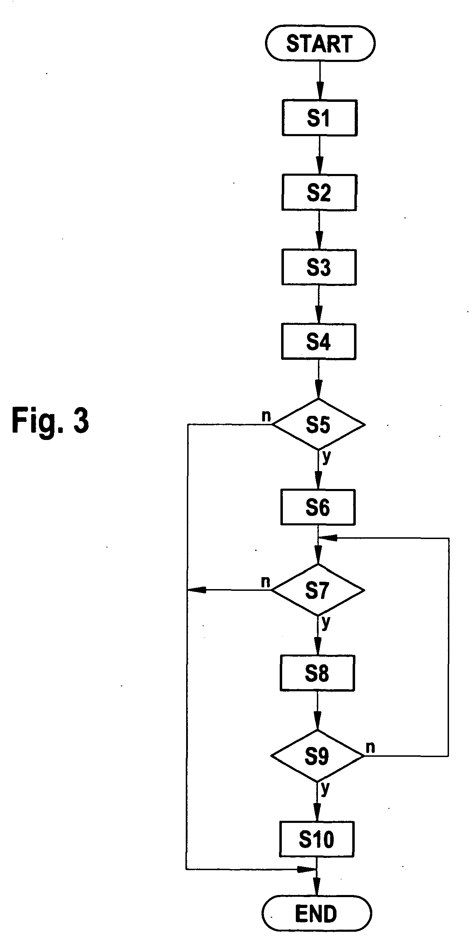

Fig. 3 zeigt ein Flussdiagramm einer Ausführungsform eines erfindungsgemäßen Verfahrens.

In Schritt S1 werden das oben beschriebene Steuergerät 100 und der oben beschriebene Diagnosetester 200 bereitgestellt. Typischerweise ist das Steuergerät 100 dabei in ein Fahrzeug eingebaut, welches schon eine bestimmte Strecke zurückgelegt hat. Dabei können Fehler am Fahrzeug auftreten, für die keine Diagnosefunktionalität in der Serien-Software des Steuergeräts 100 bereitgestellt wurde. Eine solche Funktionalität wird mit dem hier beschriebenen Verfahren bereitgestellt, wodurch eine genaue Analyse von solchen Fehlern ermöglicht wird. Ferner ist es auch möglich, Diagnosefunktionen zu implementieren, die während des normalen Fahrbetriebes nicht durchgeführt werden können oder sollen. Ein Beispiel für eine solche Funktion ist ein Kornpressionstest zum Prüfen der Kompression der Zylinder. In einem solchen Test wird die Einspritzung ausgeschaltet und über einen Sensor werden Rückschlüsse auf die Zylinderkompression gezogen, so dass ein solcher Test auch nur in einer werkstattseitigen Diagnose ausgeführt wird. Die Verwendung des vorliegenden Verfahrens für solche im regulären Fahrbetrieb nicht durchgeführte Funktionen ermöglicht es, entsprechenden Speicherplatz in der Serien-Software zu sparen. Das Verfahren kann also im Rahmen einer Routinewartung oder auch aufgrund von offensichtlichen oder vermuteten Fehlern am Fahrzeug durchgeführt werden. Das Verfahren ist insbesondere geeignet, in Vertragswerkstätten ausgeführt zu werden und erleichtert die dort durchgeführte Analyse.

In Schritt S2 wird an dem Steuergerät 100 der Diagnosetester 200 angeschlossen, in welchem die Upload-Software USW gespeichert ist, und zwar durch Verbinden der jeweiligen Schnittstellen. Beispielsweise kann der Diagnosetester 200 an der dafür am Fahrzeug vorgesehenen Diagnosebuchse angeschlossen werden.

In Schritt S3 wird die Upload-Software USW vom Diagnosetester 200 in den Upload-Speicherbereich 120B des Steuergerätes 100 geladen. Dazu wird die Upload-Software USW vom Diagnosetester 200 in den Upload-Speicherbereich 120B kopiert und dort abgespeichert. Dieser Ladevorgang wird vom oben beschriebenen Upload-Handler gesteuert.

In Schritt S4 erfolgt eine Authentifizierung (also ein Herkunftsnachweis) der Upload-Software USW. Dies kann beispielsweise wie oben beschrieben mit Hilfe von Zertifikaten geschehen, z. B. durch Entschlüsseln der mit einem privaten Schlüssel verschlüsselten (bzw. signierten) Upload-Software mittels des im Vorhinein im Speicher 110 gespeicherten dazugehörigen öffentlichen Schlüssels. Details zu geeigneten Authentifizierungsalgorithmen finden sich beispielsweise in Bruce Schneier "Applied Cryptography", John Wiley & Sons, 1996.

In Schritt S5 wird geprüft, ob die Authentifizierung in Schritt S4 erfolgreich war. Falls die Authentifizierung erfolgreich war, springt das Verfahren zu Schritt S6, und fall nicht, dann wird das Verfahren abgebrochen.

In Schritt S6 wird die Upload-Software durch eine entsprechende Eingabe in die Tastatur 230 des Diagnosegeräts 200 aktiviert.

In Schritt S7 wird geprüft, ob das Diagnose-Gerät 200 noch an das Steuergerät 100 angeschlossen ist. Falls dies der Fall ist, dann springt das Verfahren zu Schritt S8, anderenfalls wird das Verfahren abgebrochen. Somit wird sichergestellt, dass die Upload-Software, beispielsweise durch einen Hardwarefehler bedingt, nicht während des regulären Fahrbetriebes ausgeführt wird, sondern nur im Diagnosebetrieb ausgeführt werden kann.

In Schritt S8 wird die Upload-Software im Upload-Speicherbereich 120B (bzw. ein Teil, z. B. ein Programm block derselben) ausgeführt. Durch die Upload-Software wird die Funktionalität der Serien-Software um eine Diagnosefunktion erweitert, die beispielsweise vom Diagnosegerät 200 aus durch eine entsprechende Eingabe auf der Tastatur 230 aufgerufen werden kann.

In Schritt S9 wird eine Abbruchbedingung geprüft, also beispielsweise ob eine Eingabe zum Beenden der Upload-Software am Diagnose-Gerät 200 vorgenommen wurde. Falls dies der Fall ist, dann springt das Verfahren zu Schritt S10, andernfalls springt das Verfahren zurück zu Schritt S7.

In Schritt S10 wird die Upload-Software USW aus dem Upload-Speicherbereich 120B gelöscht und durch die Dummy-Upload-Software DUSW ersetzt.

Mit dem oben beschriebenen Verfahren kann die Diagnose- bzw. Testfunktionalität des Steuergerätes 100 in einfacher Weise, also insbesondere ohne aufwändigen Austausch der Serien-Software, erweitert werden kann. Ein weiterer Vorteil des oben beschriebenen Verfahrens ist der, dass es ohne eine Modifikation des Steuergerätes ausgeführt werden kann.

Obgleich die vorliegende Erfindung vorstehend anhand eines bevorzugten Ausführungsbeispiels beschrieben wurde, ist sie darauf nicht beschränkt, sondern auf vielfältige Art und Weise modifizierbar.

Beispielsweise ist die externe Hardwarevorrichtung im oben beschriebenen Beispiel als Diagnosetester ausgebildet. Sie kann aber ebenso auch als Drive-Recorder, der mit der entsprechenden Funktionalität versehen ist, ausgebildet sein.

Ferner wird im oben angegebenen Beispiel die Authentifizierung erst nach Laden der verschlüsselten Upload-Software in den Upload-Speicher 120B durchgeführt; es ist jedoch auch möglich, zunächst per Handshake (z. B. mittels einem Passwort oder dergleichen) eine Authentifizierung des Diagnose-Gerätes 200 durchzuführen und danach erst die Upload-Software zu laden.

## Patentansprüche

1. Verfahren zur Erweiterung der Funktionalität einer Serien-Software eines Steuergerätes (100) für ein Kraftfahrzeug, mit den folgenden Schritten:
(S1) Bereitstellen eines Steuergeräts (100) mit einer Schnittstelle (140), an die eine externe Hardwarevorrichtung (200) angeschlossen werden kann, und mit einem nicht-flüchtigen Seriensoftware-Speicherbereich (110), in welchem die Seriensoftware gespeichert ist, und mit einem flüchtigen Upload-Speicherbereich (120B),
(S2) Anschließen einer externen Hardwarevorrichtung (200), in welchem eine Upload-Software (USW) gespeichert ist, an die Schnittstelle (140),
(S3) Laden der Upload-Software (USW) von der externen Hardwarevorrichtung (200) in den flüchtigen Upload-Speicherbereich (120B) des Steuergerätes (100), und
(S8) Ausführen der Upload-Software (USW) im Upload-Speicherbereich (120B), wobei das Ausführen der Upload-Software (USW) die Funktionalität der Serien-Software um eine Diagnose- und/oder Testfunktion erweitert, **dadurch gekennzeichnet, dass** die Upload-Software beim Laden von der externen Hardwarevorrichtung (200) in den flüchtigen Upload-Speicherbereich (120B) des Steuergerätes (100) eine Dummy-Upload-Software (DUSW) ersetzt, deren Laufzeitverhalten gleich dem Laufzeitverhalten der Upload-Software (USW) ist.

2. Verfahren nach Anspruch 1, **dadurch gekennzeichnet, dass** die Upload-Software (USW) während des Ausführens der Upload-Software (USW) lediglich auf vorbestimmte Parameter der Serien-Software zugreift.

3. Verfahren nach einem der vorhergehenden Ansprüche, **dadurch gekennzeichnet, dass** das Verhalten der Serien-Software, insbesondere das Laufzeitverhalten der Serien-Software, durch das Ausführen der Upload-Software nicht beeinflusst wird.

4. Verfahren nach einem der vorhergehenden Ansprüche, **dadurch gekennzeichnet, dass** die Upload-Software (USW) nur ausgeführt wird, solange die externe Hardwarevorrichtung (200) an das Steuergerät (100) angeschlossen ist.

5. Verfahren nach einem der vorhergehenden Ansprüche, **dadurch gekennzeichnet, dass** weiterhin ein Schritt (S4) vorgesehen ist, in dem die Upload-Software (USW) von einer Authentifizierungseinrichtung (160) authentifiziert wird.

6. Verfahren nach einem der vorhergehenden Ansprüche, **dadurch gekennzeichnet, dass** ein weiterer Schritt vorgesehen ist, in welchem nach dem Ausführen der Upload-Software (USW) die Upload-Software (USW) gelöscht wird und die Upload-Software (USW) durch die Dummy-Upload-Software (DUSW) ersetz wird, deren Laufzeitverhalten gleich dem Laufzeitverhalten der Upload-Software (USW) ist.

7. Steuergerät mit:
einer Schnittstelle (140), an welche eine externe Hardwarevorrichtung (200) angeschlossen werden kann,
einem nicht-flüchtigen Seriensoftware-Speicherbereich (110), in welchem eine Seriensoftware gespeichert ist,
einem flüchtigen Upload-Speicherbereich (120B), welcher mit der Schnittstelle (140) verbunden ist und in welchen über die Schnittstelle (140) von der externen Hardwarevorrichtung (200) eine Upload-Software (USW) geladen wird, die die Funktionalität der Serien-Software um eine Diagnose- und/oder Testfunktion erweitert, und
Mitteln, die die Upload-Software (USW) von der externen Hardwarevorrichtung (200) in den flüchtigen Upload-Speicherbereich (120B) des Steuergerätes (100) laden, **dadurch gekennzeichnet, dass** im Upload-Speicherbereich (120B) eine Dummy-Upload-Software (DUSW) gespeichert ist, deren Laufzeitverhalten dem Laufzeitverhalten der Upload-Software (USW) entspricht, und die beim Laden der Upload-Software (USW) von der externen Hardwarevorrichtung (200) in den flüchtigen Upload-Speicherbereich (120B) des Steuergerätes (100) ersetzt wird.

8. Steuergerät nach Anspruch 7, **dadurch gekennzeichnet, dass** weiterhin eine Authentifizierungseinrichtung (160) vorgesehen ist, die die Upload-Software (USW) beim Laden von der externen Hardwarevorrichtung (200) in den Upload-Speicherbereich (120B) authentifiziert.

## Claims

1. Method for extending the functionality of a piece of standard software in a controller (100) for a motor vehicle, having the following steps:
(S1) a controller (100) having an interface (140), to which an external hardware apparatus (200) can be connected, and having a nonvolatile standard-software memory area (110), which stores the standard software, and having a volatile upload memory area (120B) is provided,
(S2) an external hardware apparatus (200) which stores a piece of upload software (USW) is connected to the interface (140),
(S3) the upload software (USW) is loaded from the external hardware apparatus (200) into the volatile upload memory area (120B) of the controller (100), and
(S8) the upload software (USW) in the upload memory area (120B) is executed, wherein the execution of the upload software (USW) extends the functionality of the standard software by a diagnosis and/or test function, **characterized in that** the upload software, when loaded from the external hardware apparatus (200) into the volatile upload memory area (120B) of the controller (100), replaces a piece of dummy upload software (DUSW), the runtime behaviour of which is the same as the runtime behaviour of the upload software (USW).

2. Method according to Claim 1, **characterized in that** the upload software (USW) merely accesses predetermined parameters of the standard software while the upload software (USW) is being executed.

3. Method according to one of the preceding claims, **characterized in that** the behaviour of the standard software, particularly the runtime behaviour of the standard software, is not influenced by the execution of the upload software.

4. Method according to one of the preceding claims, **characterized in that** the upload software (USW) is executed only for as long as the external hardware apparatus (200) is connected to the controller (100).

5. Method according to one of the preceding claims, **characterized in that** furthermore a step (S4) is provided in which the upload software (USW) is authenticated by an authentication device (160).

6. Method according to one of the preceding claims, **characterized in that** a further step is provided in which the execution of the unload software (USW) is followed by erasure of the upload software (USW) and replacement of the upload software (USW) by the dummy upload software (DUSW), the runtime behaviour of which is the same as the runtime behaviour of the upload software (USW).

7. Controller having:
an interface (140) to which an external hardware apparatus (200) can be connected,
a nonvolatile standard-software memory area (110) which stores a piece of standard software,
a volatile upload memory area (120B) which is connected to the interface (140) and into which a piece of upload software (USW) which extends the functionality of the standard software by a diagnosis and/or test function is loaded from the external hardware apparatus (200) via the interface (140), and
means which load the upload software (USW) from the external hardware apparatus (200) into the volatile upload memory area (120B) of the controller (100),
**characterized in that** the upload memory area (120B) stores a piece of dummy upload software (DUSW), the runtime behaviour of which corresponds to the runtime behaviour of the upload software (USW) and which is replaced when the upload software (USW) is loaded from the external hardware apparatus (200) into the volatile upload memory area (120B) of the controller (100).

8. Controller according to Claim 7, **characterized in that** furthermore an authentication device (160) is provided which authenticates the upload software (USW) when it is loaded from the external hardware apparatus (200) into the upload memory area (120B).

## Revendications

1. Procédé d'extension de la fonctionnalité d'un logiciel de série d'un contrôleur (100) pour un véhicule automobile, comprenant les étapes suivantes :
(S1) mise à disposition d'un contrôleur (100) muni d'une interface (140) à laquelle peut être raccordé un dispositif physique (200) externe et muni d'une zone de mémoire (110) de logiciel de série non volatile dans laquelle est mémorisé le logiciel de série et muni d'une zone de mémoire de téléchargement (120B) volatile,
(S2) raccordement à l'interface (140) d'un dispositif physique (200) externe dans lequel est mémorisé un logiciel téléchargé (USW),
(S3) chargement du logiciel téléchargé (USW) depuis le dispositif physique (200) externe dans la zone de mémoire de téléchargement (120B) volatile du contrôleur (100), et
(S8) exécution du logiciel téléchargé (USW) dans la zone de mémoire de téléchargement (120B), l'exécution du logiciel téléchargé (USW) étendant la fonctionnalité du logiciel de série d'une fonction de diagnostic et/ou de test, **caractérisé en ce que** le logiciel téléchargé, lors du chargement depuis le dispositif physique (200) externe dans la zone de mémoire de téléchargement (120B) volatile du contrôleur (100), remplace un logiciel téléchargé fictif (DUSW) dont le comportement de temps d'exécution est égal au comportement de temps d'exécution du logiciel téléchargé (USW).

2. Procédé selon la revendication 1, **caractérisé en ce que** le logiciel téléchargé (USW), pendant l'exécution du logiciel téléchargé (USW), accède uniquement à des paramètres prédéfinis du logiciel de série.

3. Procédé selon l'une des revendications précédentes, **caractérisé en ce que** le comportement du logiciel de série, notamment le comportement de temps d'exécution du logiciel de série, n'est pas influencé par l'exécution du logiciel téléchargé.

4. Procédé selon l'une des revendications précédentes, **caractérisé en ce que** le logiciel téléchargé (USW) n'est exécuté que tant que le dispositif physique (200) externe est raccordé au contrôleur (100).

5. Procédé selon l'une des revendications précédentes, **caractérisé en ce qu'**une étape supplémentaire (S4) est prévue, dans laquelle le logiciel téléchargé (USW) est authentifié par un dispositif d'authentification (160).

6. Procédé selon l'une des revendications précédentes, **caractérisé en ce qu'**une étape supplémentaire est prévue, dans laquelle, après l'exécution du logiciel téléchargé (USW), le logiciel téléchargé (USW) est effacé et le logiciel téléchargé (USW) est remplacé par le logiciel téléchargé fictif (DUSW) dont le comportement de temps d'exécution est égal au comportement de temps d'exécution du logiciel téléchargé (USW).

7. Contrôleur comprenant :
une interface (140) à laquelle peut être raccordé un dispositif physique (200) externe,
une zone de mémoire (110) de logiciel de série non volatile dans laquelle est mémorisé le logiciel de série,
une zone de mémoire de téléchargement (120B) volatile qui est reliée à l'interface (140) et dans laquelle un logiciel téléchargé (USW) est chargé depuis le dispositif physique (200) externe par le biais de l'interface (140), lequel étend la fonctionnalité du logiciel de série d'une fonction de diagnostic et/ou de test, et
des moyens qui chargent le logiciel téléchargé (USW) depuis le dispositif physique (200) externe dans la zone de mémoire de téléchargement (120B) volatile du contrôleur (100), **caractérisé en ce que** dans la zone de mémoire de téléchargement (120B) est mémorisé un logiciel téléchargé fictif (DUSW) dont le comportement de temps d'exécution correspond au comportement de temps d'exécution du logiciel téléchargé (USW) et qui est remplacé lors du chargement du logiciel téléchargé (USW) depuis le dispositif physique (200) externe dans la zone de mémoire de téléchargement (120B) volatile du contrôleur (100).

8. Contrôleur selon la revendication 7, **caractérisé en ce qu'**il est en outre prévu un dispositif d'authentification (160) qui authentifie le logiciel téléchargé (USW) lors du chargement depuis le dispositif physique (200) externe dans la zone de mémoire de téléchargement (120B).
